# EUROPEAN PATENT SPECIFICATION

(11) **EP 4 300 705 B1**
(45) Date of publication and mention of the grant of the patent: **09.09.2026**
(21) Application number: 23767155.7
(22) Date of filing: 08.03.2023
(51) Int. Cl.: H01M 50/572, H01M 50/502, H01M 50/581, H01M 50/591, H01R 13/52, H01R 13/533

(54) **HIGH HEAT-RESISTANT BATTERY PACK CONNECTOR FOR PREVENTION OF THERMAL RUNAWAY**
BATTERIEPACKVERBINDER MIT HOHER WÄRMEBESTÄNDIGKEIT ZUR VERHINDERUNG VON THERMISCHEM DURCHGEHEN
CONNECTEUR DE BLOC-BATTERIE RÉSISTANT À LA CHALEUR ÉLEVÉE POUR EMPÊCHER UN EMBALLEMENT THERMIQUE

(30) Priority: 11.03.2022 KR 20220030664
(43) Date of publication of application: 03.01.2024
(73) Proprietor: LG Energy Solution, Ltd., Seoul 07335 (KR)
(72) Inventor: LEE, Chang Hun, Daejeon 34122 (KR); JUNG, Sang Eun, Daejeon 34122 (KR)
(74) Representative: Goddar, Heinz J.
(86) International application number: PCT/KR2023/003149
(87) International publication number: WO 2023/172054

(56) References cited:
- KR-A- 20100 082 532
- KR-A- 20180 054 117
- KR-A- 20190 009 976
- KR-A- 20190 009 976
- KR-A- 20210 047 876
- KR-B1- 101 610 892
- US-A1- 2015 244 099
- US-B2- 9 397 431

## Description

### Technical Field

This application claims the benefit of priority to Korean Patent Application No. 2022-0030664 filed on March 11, 2022.

The present invention relates to a high heat resistant connector for battery packs capable of preventing thermal runaway. More particularly, the present invention relates to a high heat resistant connector for battery packs capable of preventing thermal runaway, wherein the connector is provided in a battery pack used as an energy source of a device requiring high safety, such as an electric vehicle.

### Background Art

A lithium secondary battery, which has high energy density and excellent lifespan characteristics, is mainly used as an energy source of an electric vehicle. There is a danger of the lithium secondary battery having high energy density exploding when the lithium secondary battery overheats. In addition, when fire breaks out, it is difficult to extinguish fire until the lithium secondary battery is completely combusted.

When thermal runaway occurs due to abnormality of a battery cell in a battery pack, a connector for battery packs adjacent to an electrode lead is most easily exposed to flames. Secondary damage may be caused due to breakage of the connector for battery packs. A conventional connector for battery packs is made of a material that exhibits low heat resistance, whereby the connector is easily melted. As a result, there is a problem in that flames due to thermal runaway are spread out of the battery pack.

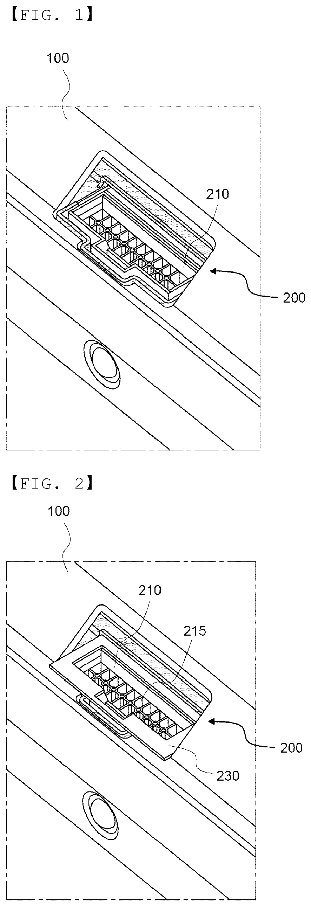

FIG. 1 is a perspective view of a conventional connector for battery packs. Referring to FIG. 1, the conventional connector 200 for battery packs is located at one end of a battery pack 100.

Since a lower end of the conventional connector 200 for battery packs is electrically connected to an electrode terminal of a battery module, the temperature of the conventional connector for battery packs abruptly increases when fire breaks out. Since the conventional connector for battery packs is made of plastic, a housing 210 of the connector for battery packs may be easily melted when the temperature of the battery pack increases.

When the housing 210 of the connector for battery packs is melted, an opening is formed in a pack case, and flames and sparks may erupt through the opening. As a result, thermal runaway may be spread to another battery pack, which seriously reduces safety.

Patent Document 1 relates to a battery module, wherein the battery module includes a connector exposed from the battery module so as to be electrically connected to an external device, and the connector includes a metal connector housing.

In Patent Document 1, static electricity introduced into the connector for battery packs flows out to a ground pin connection portion and a ground pin via the metal housing outside the connector, and the static electricity that has flown to the ground pin is grounded through an external ground line. That is, Patent Document 1 is technology for solving a problem due to static electricity.

Patent Document 1 does not suggest a method of solving a problem with a connector for battery packs damaged when a thermal runaway phenomenon occurs.

Patent Document 2 relates to an electronic control device, wherein a space between a connector cover and a housing body is sealed by a potting layer without a special connector or O-ring, whereby it is possible to improve waterproof performance between the connector cover and the housing body.

In Patent Document 2, the potting layer, which is formed using silicone, epoxy, or urethane, is provided in a housing of the electronic control device; however, a method of preventing spread of thermal runaway in a battery cell is not considered.

Even though the conventional connector for battery packs becomes a great problem when thermal runaway occurs due to overheating, as described above, technology capable of considering the same or solving such a problem has not yet been proposed.

### (Prior Art Documents)

(Patent Document 1) Korean Patent Application Publication No. 2018-0090572 (2018.08.13)
(Patent Document 2) Korean Registered Patent Publication No. 1418683 (2014.07.04)
US 9,397,431 B2, US 2015/244099 A1 and KR 2019 0009976 A describe respective connectors in accordance with a preamble of independent claim 1.

### Disclosure

### Technical Problem

The present invention has been made in view of the above problems, and it is an object of the present invention to provide a high heat resistant connector for battery packs capable of preventing thermal runaway, wherein, when flames are generated in a battery pack, melting of the connector for battery packs having low resistance to the flames is prevented and spread of thermal runaway is inhibited.

### Technical Solution

A connector for battery packs according to the present invention to accomplish the above object includes a terminal pin configured to serve as an electrical connection path, a housing to which the terminal pin is mounted, and a high heat resistant member added to the housing.

The housing may include a material that is different from a material of the high heat resistant member.

The high heat resistant member is manufactured by solidifying potting liquid made of an insulative material. The insulative material is a material that is maintained in shape without being melted even at a high temperature of 1,000°C or more.

The insulative material may be high heat resistant silicone or ceramic.

The housing may include a lower end portion to which the terminal pin is coupled, a side wall portion extending perpendicular to the lower end portion, and a partition wall portion configured to prevent deformation of the terminal pin when an external terminal is coupled to the terminal pin.

The high heat resistant member may be mounted to the entirety of an outer surface of the side wall portion.

The lower end portion may extend outwards from an outer periphery of the side wall portion by a distance that is equal to the thickness of the high heat resistant member.

The side wall portion may include an outer side wall portion extending from an outer periphery of the lower end portion perpendicular thereto and an inner side wall portion spaced apart inwards from the outer side wall portion and parallel to the outer side wall portion, and the high heat resistant member may be added between the outer side wall portion and the inner side wall portion.

The connector may be a low voltage connector.

A first embodiment of a method of manufacturing a connector for battery packs includes pouring potting liquid made of an insulative material into a mold, solidifying the potting liquid to manufacture a high heat resistant member, and coupling the high heat resistant member to a housing of a connector for battery packs, wherein the high heat resistant member is coupled to an outer surface of a side wall portion of the housing.

The coupling of the high heat resistant member to the housing of the connector for battery packs may be performed using interference fitting or adding an adhesive material between the housing and the high heat resistant member.

A second embodiment of the method of manufacturing the connector for battery packs includes preparing the connector for battery packs including the outer side wall portion and the inner side wall portion, and adding the high heat resistant member to a space between the outer side wall portion and the inner side wall portion, wherein the outer side wall portion and the inner side wall portion are formed along the entirety of the circumference of a lower end portion of the connector for battery packs.

The high heat resistant member may be added using a dispensing method.

In addition, the present invention may provide various combinations of the above constructions.

### Advantageous Effects

As is apparent from the above description, in a connector for battery packs according to the present invention, a high heat resistance member is added to a part brought into tight contact with a battery pack, and therefore the shape of the high heat resistance member is maintained when the temperature of the battery pack increases. Consequently, it is possible to prevent the connector for battery packs from being melted at a high temperature.

In the present invention, it is possible to provide a battery pack capable of preventing spread of a thermal runaway phenomenon out of the battery pack while having improved safety, since the shape of the connector for battery packs is maintained, as described above.

### Description of Drawings

FIG. 1 is a perspective view of a conventional connector for battery packs.
FIG. 2 is a partial perspective view of a battery pack in which a connector for battery packs according to the present invention is mounted.
FIG. 3 is a perspective view of a connector for battery packs according to a first embodiment.
FIG. 4 is a perspective view of a connector for battery packs according to a second embodiment.

### Best Mode

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

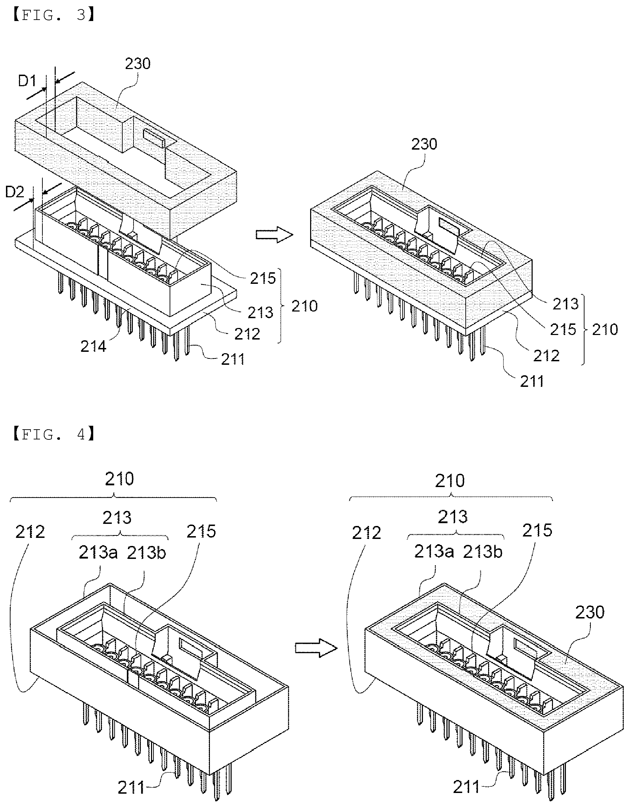

FIG. 2 is a partial perspective view of a battery pack in which a connector for battery packs according to the present invention is mounted, and FIG. 3 is a perspective view of a connector for battery packs according to a first embodiment.

Referring to FIGs. 2 and 3, the connector 200 for battery packs according to the present invention, which is mounted in one end of a battery pack 100, is electrically connected to a terminal of a battery module in the battery pack 100.

The connector 200 for battery packs may be a low-voltage connector. The low-voltage connector may be used to drive a battery management system or electric parts or to sense the voltage and temperature of battery cells.

The connector 200 for battery packs includes a terminal pin 211, which serves as an electrical connection path, a housing 210 to which the terminal pin 211 is mounted, and a high heat resistant member 230 added to the housing 210.

A partition wall portion 215, to which an external terminal is coupled, is formed in the housing 210. The partition wall portion 215 is configured to prevent deformation of the terminal pin when the external terminal is coupled.

The terminal pin 211 is mounted in the partition wall portion 215 of the housing 210. The part to which the terminal pin 211 is mounted is complicated to mold and requires precision. Consequently, it is preferable for the housing 210 to be manufactured by injection molding, and the housing 210 is made of a material different from the material for the high heat resistant member 230. For example, the housing 210 must be made of a material that can be injection molded, and therefore the housing may be made of plastic having a lower melting temperature than the high heat resistant member 230.

The high heat resistant member 230 may be manufactured by solidifying potting liquid made of an insulative material.

Specifically, the high heat resistant member 230 may be manufactured by pouring potting liquid into a mold and solidifying the potting liquid into a desired shape. The high heat resistant member 230 thus manufactured may be assembled to the housing or may be directly applied to the housing to manufacture a connector for battery packs.

The insulative material is a material that is maintained in shape without being melted even at a high temperature of 1,000°C or more. For example, high heat resistant silicone or ceramic may be used.

The connector for battery packs is coupled to an opening formed in the battery pack 100. The outer surface of the connector for battery packs is inserted into the opening so as to be mounted therein. The high heat resistant member 230 of the connector 200 for battery packs shown in FIG. 2 is inserted into the opening so as to be mounted therein. Even when the temperature of a pack case of the battery pack increases or the temperature of a lower part of the connector 200 for battery packs increases, therefore, deformation of the part mounted in the battery pack 100 due to heat may be prevented, since the part mounted in the battery pack 100 is the high heat resistant member 230.

The housing 210 includes a lower end portion 212, to which the terminal pin 211 is coupled, a side wall portion 213 extending so as to be perpendicular to the lower end portion 212, and a partition wall portion 215 configured to prevent deformation of the terminal pin 211 when an external terminal is coupled.

The lower end portion 212 of the connector for battery packs according to the first embodiment shown in FIG. 3 extends outwards from an outer periphery of the side wall portion 213 by a distance that is equal to the thickness D1 of the high heat resistant member 230. That is, the distance D2 from an outer periphery 214 of the lower end portion 212 to the side wall portion 213 may be formed so as to correspond to the thickness D1 of the high heat resistant member 230. The high heat resistant member 230 coupled to an outer surface of the side wall portion 213 may be supported by the lower end portion 212.

Alternatively, even when the thickness D1 of the high heat resistant member is formed so as to be greater than the distance D2 from an outer periphery 214 of the lower end portion to the side wall portion 213, the high heat resistant member 230 may be supported by the lower end portion 212.

In a method of manufacturing the connector for battery packs according to the first embodiment configured as described above, a mold having a shape that can be mounted in the entirety of the outer surface of the side wall portion 213 of a housing is prepared first. Potting liquid made of an insulative material may be poured into the mold, and the potting liquid may be solidified to manufacture a high heat resistant member 230. When the high heat resistant member 230 thus manufactured is coupled to the housing 210 of the connector for battery packs, the high heat resistant member 230 is coupled to the outer surface of the side wall portion 213 of the housing.

The high heat resistant member 230 is configured to wrap the entirety of the outer surface of the side wall portion 213 and to have an inner surface corresponding to the outer surface of the side wall portion 213. Consequently, the entirety of the inner surface of the high heat resistant member 230 is mounted to the entirety of the outer surface of the side wall portion 213 in completely tight contact therewith.

Even when flames are generated in the battery pack, therefore, it is possible to prevent the flames from erupting out of the battery pack, since the high heat resistant member 230 is neither melted nor deformed.

The step of coupling the high heat resistant member 230 to the housing 210 of the connector 200 for battery packs may be performed using an interference fitting method or a method of adding an adhesive material between the housing and the high heat resistant member such that the housing and the high heat resistant member are adhered to each other by the adhesive material.

FIG. 4 is a perspective view of a connector for battery packs according to a second embodiment.

Referring to FIG. 4, a housing 210 includes a lower end portion 212, to which a terminal pin 211 is coupled, a side wall portion 213 extending so as to be perpendicular to the lower end portion 212, and a partition wall portion 215 configured to prevent deformation of the terminal pin 211 when an external terminal is coupled.

The connector for battery packs according to the second embodiment shown in FIG. 4 is different from the connector for battery packs according to the first embodiment shown in FIG. 3 in terms of shape of the side wall portion and position to which a high heat resistant member is added.

The side wall portion 213 includes an outer side wall portion 213a extending from an outer periphery of the lower end portion 212 so as to be perpendicular thereto and an inner side wall portion 213b spaced apart inwards from the outer side wall portion 213a so as to be parallel to the outer side wall portion 213a, the inner side wall portion 213b extending so as to be perpendicular to the lower end portion 212, wherein a high heat resistant member 230 is added between the outer side wall portion 213a and the inner side wall portion 213b.

A method of manufacturing the connector for battery packs according to the second embodiment configured as described above may include a step of preparing a connector for battery packs including an outer side wall portion 213a and an inner side wall portion 213b and a step of adding a high heat resistant member 230 between the outer side wall portion 213a and the inner side wall portion 213b, wherein the outer side wall portion 213a and the inner side wall portion 213b may be formed along the entirety of the circumference of a lower end portion 212 of the connector for battery packs.

That is, since the high heat resistant member 230 is solidified in a state of being added between the outer side wall portion 213a and the inner side wall portion 213b so as to fill the entirety of a space therebetween, the high heat resistant member is neither melted nor deformed even though flames are generated in a battery pack. When the connector for battery packs having the high heat resistant member added thereto is used, therefore, it is possible to prevent flames from erupting out of the battery pack.

The high heat resistant member may be added using any of various methods, such as a method of adding potting liquid. For example, a dispensing method having a very low defect rate and requiring no separate mold may be used. In addition, when the dispensing method is used, it is possible to increase the speed to manufacture the connector for battery packs, whereby it is possible to improve productivity.

As is apparent from the above description, in the present invention, a high heat resistant member is added to a connector for battery packs, which is mounted in a battery pack, whereby it is possible to prevent flames from erupting out of a battery pack when fire breaks out in the battery pack. Consequently, it is possible to inhibit spread of thermal runaway to another battery pack. Furthermore, it is possible to secure user safety.

Those skilled in the art to which the present invention pertains will appreciate that various applications and modifications are possible within the category of the present invention based on the above description.

### (Description of Reference Symbols)

100: Battery pack
200: Connector for battery packs
210: Housing
211: Terminal pin
212: Lower end portion
213: Side wall portion
213a: Outer side wall portion
213b: Inner side wall portion
214: Outer periphery of lower end portion
215: Partition wall portion
230: High heat resistant member
D1: Thickness of high heat resistant member
D2: Distance from outer periphery of lower end portion to side wall portion

## Claims

1. A connector (200) for battery packs (100), the connector (200) comprising:
a terminal pin (211) configured to serve as an electrical connection path;
a housing (210) to which the terminal pin (211) is mounted; and
a high heat resistant member (230) added to the housing (210),
**characterized in that** the high heat resistant member (230) is manufactured by solidifying potting liquid made of an insulative material that is maintained in shape without being melted even at a high temperature of 1,000°C or more.

2. The connector (200) according to claim 1, wherein the housing (210) comprises a material that is different from a material of the high heat resistant member (230).

3. The connector (200) according to claim 1, wherein the insulative material is high heat resistant silicone or ceramic.

4. The connector (200) according to claim 1, wherein the housing (210) comprises:
a lower end portion (212) to which the terminal pin (211) is coupled;
a side wall portion (213) extending perpendicular to the lower end portion (212); and
a partition wall portion (215) configured to prevent deformation of the terminal pin (211) when an external terminal is coupled to the terminal pin (211).

5. The connector (200) according to claim 4, wherein the high heat resistant member (230) is mounted to an entirety of an outer surface of the side wall portion (213).

6. The connector (200) according to claim 4, wherein the lower end portion (212) extends outwards from an outer periphery (214) of the side wall portion (213) by a distance (D2) that is equal to a thickness (D1) of the high heat resistant member (230).

7. The connector (200) according to claim 4, wherein the side wall portion (213) comprises an outer side wall portion (213a) extending from an outer periphery (214) of the lower end portion (212) perpendicular thereto and an inner side wall portion (213b) spaced apart inwards from the outer side wall portion (213a) and parallel to the outer side wall portion (213a), and the high heat resistant member (230) is added between the outer side wall portion (213a) and the inner side wall portion (213b).

8. The connector (200) according to any one of claims 1 to 7, wherein the connector (200) is a low voltage connector for driving a battery management system or electric parts or sensing a voltage and temperature of battery cells.

9. A method of manufacturing the connector (200) according to any one of claims 1 to 6, the method comprising:
pouring potting liquid made of an insulative material into a mold;
solidifying the potting liquid to manufacture a high heat resistant member (230); and
coupling the high heat resistant member (230) to a housing (210) of a connector (200) for battery packs (100), wherein
the high heat resistant member (230) is coupled to an outer surface of a side wall portion (213) of the housing (210).

10. The method according to claim 9, wherein the coupling of the high heat resistant member (230) to the housing (210) of the connector (200) for battery packs (100) is performed using interference fitting or adding an adhesive material between the housing (210) and the high heat resistant member (230).

11. A method of manufacturing the connector (200) according to claim 7, the method comprising:
preparing the connector (200) for battery packs (100) comprising the outer side wall portion (213a) and the inner side wall portion (213b); and
adding the high heat resistant member (230) to a space between the outer side wall portion (213a) and the inner side wall portion (213b),
wherein the outer side wall portion (213a) and the inner side wall portion (213b) are formed along an entirety of the circumference of a lower end portion (212) of the connector (200) for battery packs (100).

12. The method according to claim 11, wherein the high heat resistant member (230) is added using a dispensing method.

## Patentansprüche

1. Verbinder (200) für Batteriepacks (100), wobei der Verbinder (200) aufweist:
einen Anschlussstift (211), der konfiguriert ist, als ein elektrischer Verbindungspfad zu dienen;
ein Gehäuse (210), an dem der Anschlussstift (211) montiert ist; und
ein hochwärmebeständiges Element (230), das zu dem Gehäuse (210) hinzugefügt ist,
**dadurch gekennzeichnet, dass** das hochwärmebeständige Element (230) durch Verfestigen einer Vergussflüssigkeit hergestellt ist, die aus einem isolierenden Material hergestellt ist, das in Form gehalten wird, ohne selbst bei einer hohen Temperatur von 1.000°C oder mehr geschmolzen zu werden.

2. Verbinder (200) nach Anspruch 1, wobei das Gehäuse (210) ein Material aufweist, das von einem Material des hochwärmebeständigen Elements (230) verschieden ist.

3. Verbinder (200) nach Anspruch 1, wobei das isolierende Material hochwärmebeständiges Silikon oder Keramik ist.

4. Verbinder (200) nach Anspruch 1, wobei das Gehäuse (210) aufweist:
einen unteren Endabschnitt (212), mit dem der Anschlussstift (211) gekoppelt ist;
einen Seitenwandabschnitt (213), der sich senkrecht zu dem unteren Endabschnitt (212) erstreckt; und
einen Trennwandabschnitt (215), der konfiguriert ist, eine Verformung des Anschlussstifts (211) zu verhindern, wenn ein externer Anschluss mit dem Anschlussstift (211) gekoppelt ist.

5. Verbinder (200) nach Anspruch 4, wobei das hochwärmebeständige Element (230) an einer Gesamtheit einer Außenfläche des Seitenwandabschnitts (213) montiert ist.

6. Verbinder (200) nach Anspruch 4, wobei sich der untere Endabschnitt (212) von einem Außenumfang (214) des Seitenwandabschnitts (213) um einen Abstand (D2), der gleich einer Dicke (D1) des hochwärmebeständigen Elements (230) ist, nach außen erstreckt.

7. Verbinder (200) nach Anspruch 4, wobei der Seitenwandabschnitt (213) einen äußeren Seitenwandabschnitt (213a), der sich von einem Außenumfang (214) des unteren Endabschnitts (212) senkrecht dazu erstreckt, und einen inneren Seitenwandabschnitt (213b) aufweist, der von dem äußeren Seitenwandabschnitt (213a) nach innen und parallel zu dem äußeren Seitenwandabschnitt (213a) beabstandet ist, und das hochwärmebeständige Element (230) zwischen dem äußeren Seitenwandabschnitt (213a) und dem inneren Seitenwandabschnitt (213b) hinzugefügt ist.

8. Verbinder (200) nach einem der Ansprüche 1 bis 7, wobei der Verbinder (200) ein Niederspannungsverbinder zum Antreiben eines Batteriemanagementsystems oder elektrischer Teile oder zum Erfassen einer Spannung und Temperatur von Batteriezellen ist.

9. Verfahren zum Herstellen des Verbinders (200) nach einem der Ansprüche 1 bis 6, wobei das Verfahren aufweist:
Gießen einer Vergussflüssigkeit, die aus einem isolierenden Material hergestellt ist, in eine Form;
Verfestigen der Vergussflüssigkeit, um ein hochwärmebeständiges Element (230) herzustellen; und
Koppeln des hochwärmebeständigen Elements (230) mit einem Gehäuse (210) eines Verbinders (200) für Batteriepacks (100), wobei
das hochwärmebeständige Element (230) mit einer Außenfläche eines Seitenwandabschnitts (213) des Gehäuses (210) gekoppelt ist.

10. Verfahren nach Anspruch 9, wobei das Koppeln des hochwärmebeständigen Elements (230) mit dem Gehäuse (210) des Verbinders (200) für Batteriepacks (100) unter Verwendung von Presspassung oder Hinzufügen eines Klebematerials zwischen dem Gehäuse (210) und dem hochwärmebeständigen Element (230) durchgeführt wird.

11. Verfahren zum Herstellen des Verbinders (200) nach Anspruch 7, wobei das Verfahren umfasst:
Vorbereiten des Verbinders (200) für Batteriepacks (100), der den äußeren Seitenwandabschnitt (213a) und den inneren Seitenwandabschnitt (213b) aufweist; und
Hinzufügen des hochwärmebeständigen Elements (230) zu einem Raum zwischen dem äußeren Seitenwandabschnitt (213a) und dem inneren Seitenwandabschnitt (213b),
wobei der äußere Seitenwandabschnitt (213a) und der innere Seitenwandabschnitt (213b) entlang eines gesamten Umfangs eines unteren Endabschnitts (212) des Verbinders (200) für Batteriepacks (100) ausgebildet sind.

12. Verfahren nach Anspruch 11, wobei das hochwärmebeständige Element (230) unter Verwendung eines Abgabeverfahrens hinzugefügt wird.

## Revendications

1. Connecteur (200) pour blocs-batterie (100), le connecteur (200) comprenant :
une broche de borne (211) configurée pour servir de chemin de connexion électrique ;
un boîtier (210) sur lequel est montée la broche de borne (211) ; et
un élément à haute résistance à la chaleur (230) ajouté au boîtier (210),
**caractérisé en ce que** l'élément à haute résistance à la chaleur (230) est fabriqué en solidifiant un liquide d'enrobage réalisé avec un matériau isolant dont la forme est maintenue sans être fondu, même avec des températures de 1 000°C ou davantage.

2. Connecteur (200) selon la revendication 1, le boîtier (210) comprenant un matériau différent d'un matériau de l'élément à haute résistance à la chaleur (230).

3. Connecteur (200) selon la revendication 1, le matériau isolant étant du silicone ou de la céramique à haute résistance à la chaleur.

4. Connecteur (200) selon la revendication 1, le boîtier (210) comprenant :
une partie d'extrémité inférieure (212) à laquelle la broche de borne (211) est couplée ;
une partie de paroi latérale (213) s'étendant perpendiculairement à la partie d'extrémité inférieure (212) ; et
une partie de cloison (215) configurée pour empêcher la déformation de la broche de borne (211) lors du couplage d'une borne externe à la broche de borne (211).

5. Connecteur (200) selon la revendication 4, l'élément à haute résistance à la chaleur (230) étant monté sur une intégralité d'une surface extérieure de la partie à paroi latérale (213).

6. Connecteur (200) selon la revendication 4, la partie d'extrémité inférieure (212) s'étendant vers l'extérieur depuis un pourtour extérieur (214) de la partie à paroi latérale (213) d'une distance (D2) égale à une épaisseur (D1) de l'élément à haute résistance à la chaleur (230).

7. Connecteur (200) selon la revendication 4, la partie à paroi latérale (213) comprenant une partie à paroi latérale extérieure (213a) s'étendant d'un pourtour extérieur (214) de la partie d'extrémité inférieure (212) perpendiculaire à celle-ci et une partie à paroi latérale intérieure (213b) espacée vers l'intérieur depuis la partie à paroi latérale extérieure (213a) et parallèle à la partie à paroi latérale extérieure (213a), et l'élément à haute résistance à la chaleur (230) étant ajouté entre la partie à paroi latérale extérieure (213a) et la partie à paroi latérale intérieure (213b).

8. Connecteur (200) selon une quelconque des revendication 1 à 7, le connecteur (200) étant un connecteur basse tension pour entraîner un système de gestion de batterie ou des éléments électriques, ou détecter une tension et une température de cellules de batterie.

9. Procédé de fabrication du connecteur (200) selon une quelconque des revendications 1 à 6, le procédé comprenant :
le versement dans un moule d'un liquide d'enrobage réalisé avec un matériau isolant ;
la solidification du liquide d'enrobage pour la fabrication d'un élément à haute résistance à la chaleur (230) ; et
le couplage de l'élément à haute résistance à la chaleur (230) à un boîtier (210) d'un connecteur (200) pour blocs-batterie (100),
l'élément à haute résistance à la chaleur (230) étant couplé à une surface extérieure d'une partie de paroi latérale (213) du boîtier (210).

10. Procédé selon la revendication 9, le couplage de l'élément à haute résistance à la chaleur (230) au boîtier (210) du connecteur (200) pour blocs-batterie (100) étant effectué par ajustement serré, ou par l'adjonction d'une matière adhésive entre le boîtier (210) et l'élément à haute résistance à la chaleur (230).

11. Procédé de fabrication du connecteur (200) selon la revendication 7, le procédé comprenant :
la préparation du connecteur (200) pour blocs-batterie (100) comprenant la partie à paroi latérale extérieure (213a) et la partie à paroi latérale intérieure (213b) ; et
l'adjonction de l'élément à haute résistance à la chaleur (230) à un espace entre la partie à paroi latérale extérieure (213a) et la partie à paroi latérale intérieure (213b),
la partie à paroi latérale extérieure (213a) et la partie à paroi latérale intérieure (213b) étant formées sur l'intégralité de la circonférence d'une partie d'extrémité inférieure (212) du connecteur (200) pour blocs-batterie (100).

12. Procédé selon la revendication 11, l'élément à haute résistance à la chaleur (230) étant ajouté à l'aide d'un procédé de distribution.
